(19) Europäisches Patentamt
European Patent Office
Office européen des brevets

(11) EP 2 574 638 B1

(12) **EUROPEAN PATENT SPECIFICATION**

(45) Date of publication and mention of the grant of the patent:
**06.09.2017 Bulletin 2017/36**

(51) Int Cl.:
***C08G 77/20*** *(2006.01)* ***C08G 77/38*** *(2006.01)*
***C09J 7/02*** *(2006.01)*

(21) Application number: **12183505.2**

(22) Date of filing: **07.09.2012**

(54) **(Meth)acrylic-Modified Organopolysiloxane, Radiation-Curable Silicone Composition, Silicone Release Liner, and Making Methods**

(Meth)acryl-modifiziertes Organopolysiloxan, strahlungshärtbare Silikonzusammensetzung, Silikonabziehschicht und Herstellungsverfahren

Organopolysiloxane (méth)acrylique modifié, composition de silicone durcissable par rayonnement, doublure de libération de silicone et procédés de fabrication

(84) Designated Contracting States:
**DE FI FR GB**

(30) Priority: **29.09.2011 JP 2011214759**

(43) Date of publication of application:
**03.04.2013 Bulletin 2013/14**

(73) Proprietor: **Shin-Etsu Chemical Co., Ltd.**
**Chiyoda-ku,**
**Tokyo (JP)**

(72) Inventors:
- **Tsuchida, Osamu**
  **Annaka-shi, Gunma (JP)**
- **Irifune, Shinji**
  **Annaka-shi, Gunma (JP)**

(74) Representative: **Stoner, Gerard Patrick et al**
**Mewburn Ellis LLP**
**City Tower**
**40 Basinghall Street**
**London EC2V 5DE (GB)**

(56) References cited:
**EP-A1- 0 281 681 US-A- 4 293 678**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 574 638 B1

## Description

### TECHNICAL FIELD

This invention relates to a method of making a silicone release liner using a radiation-curable silicone composition comprising a (meth)acrylic-modified organopolysiloxane, and to the silicone release liner made thereby.

### BACKGROUND

Because of excellent release properties relative to sticky materials, cured coatings resulting from curing of silicone compositions find use in numerous fields of industry as release liners. They are used and consumed in a large volume all over the world. Their most common application is protection over pressure-sensitive adhesive layers. Recently, such silicone coatings find an increasing application using a polyethylene terephthalate (PET) film as the substrate, intended for use in electronic parts, optical components or the like.

The cure mode of silicone compositions is generally divided into two types: heat cure and radiation cure. In the current market, heat-curable compositions account for the majority. Where heat-sensitive substrates are used, radiation-curable compositions are suitable.

One advantage of the radiation-curable compositions is the elimination of metal catalysts. For the heat-curable compositions, tin complexes are often used as the condensation type catalyst. However, the current concerns about the environment recommend to refrain from using tin complexes. Also, platinum complexes are used as the addition type catalyst, but there remains a problem that platinum is quite expensive.

Another advantage of radiation-curable compositions is a very high cure rate, which offers a higher production efficiency than the heat-curable ones.

The radiation-curing mechanism is divided into several types. Known mechanisms include an epoxy type curing mechanism via cationic polymerization and mercapto and acrylic type curing mechanisms via radical polymerization.

The acrylic type curing mechanism requires an equipment for reducing oxygen concentration because cure is retarded by the presence of oxygen, while its most advantage is very good adhesion. The acrylic type curing mechanism can be exploited to the application where adhesion is more crucial as on PET film, with its market expansion in the future being expectable.

One known method for preparing acrylic-modified organopolysiloxane is the reaction of epoxy-modified organopolysiloxane with common acrylic acid to introduce acrylic groups, as described in Patent Document 1.

However, the method of Patent Document 1 has several problems. Epoxy-functional organopolysiloxane is subjected to ring opening by reaction with acrylic acid and acrylic anhydride, whereby acrylic-modified organopolysiloxane is obtained. Regrettably, acrylic anhydride is expensive. In addition, acrylic anhydride is difficult to handle because it is highly reactive and susceptible to hydrolysis in the presence of moisture. Further, the method suffers from a slow reaction rate because the charges of acrylic groups and epoxy groups for reaction are equivalent, and a low rate of acrylic introduction because not all acrylic acid reacts with epoxy group.

### Citation List

Patent Document

1: JP-B H05-83570
(EP 0281681, USP 4908274)

### THE INVENTION

An object of the invention is to provide a method for preparing a silicone release liner comprising a radiation-curable silicone composition comprising an acrylic-modified organopolysiloxane with a high rate of acrylic introduction, which can be prepared using less expensive reactants. A silicone release liner comprising the composition is a further object.

The inventors have found that an acrylic-modified organopolysiloxane with a high rate of acrylic introduction can be prepared using inexpensive common reactants.

In one aspect, as specified in claim 1, provides a method for preparing a silicone release liner comprising the steps of

Reacting (A) an epoxy-modified organopolysiloxane having the average compositional formula (1):

$$R^1_m R^2_n SiO_{(4-m-n)/2} \qquad (1)$$

wherein $R^1$ is a substituted or unsubstituted monovalent hydrocarbon group of 1 to 10 carbon atoms, $R^2$ is an epoxy-containing organic group, m and n are numbers in the range: m > 0, n > 0 and 0 < m+n ≤ 3, with (B) (meth)acrylic acid in an amount of at least 1.0 equivalent per equivalent of epoxy group in component (A) in the presence of (C) a base selected from an alkali metal hydroxide and alkaline earth metal hydroxide in an amount of 0.01 to 0.1 equivalent per equivalent of epoxy group in component (A), thereby obtaining a (meth)acrylic-modified organopolysiloxane having the average compositional formula (2):

$$R^1_mR^6_nSiO_{(4-m-n)/2} \qquad (2)$$

wherein $R^1$, m and n are as defined above and $R^6$ is a (meth)acryloxy-containing organic group,
mixing the (meth)acrylic-modified organopolysiloxane with a photopolymerization initiator, thereby obtaining a radiation-curable silicone composition,
coating the composition onto a substrate to form a coating thereon, and
exposing the coating to radiation for curing the coating.

Preferably, component (A) has an epoxy equivalent of 200 to 2000 g/mol.
A further aspect herein (claim 7) is a silicone release liner which has been prepared by the above method.

ADVANTAGEOUS EFFECTS

The present methods of preparing (meth)acrylic-modified organopolysiloxanes enable substantial savings of reactant expense, because they can be done using only inexpensive reactants. We find that the (meth)acrylic-modified organopolysiloxanes obtained have a notably high rate of acrylic introduction, are novel products, and may be cured on exposure to suitable radiation. The cured products exhibit high substrate adhesion and are useful as release liners.

FURTHER EXPLANATIONS; OPTIONS AND PREFERENCES

As used herein, the term "(meth)acrylic" refers to both acrylic and methacrylic, the term being employed for the sake of simplicity. EB stands for electron beam and UV for ultraviolet radiation.
Briefly stated, a (meth)acrylic-modified organopolysiloxane of formula (2) is prepared by reacting (A) an epoxy-modified organopolysiloxane of formula (1) with (B) (meth)acrylic acid in the presence of (C) a base.

(A) Epoxy-modified organopolysiloxane

One of the starting reactants is (A) an epoxy-modified organopolysiloxane having the average compositional formula (1).

$$R^1_mR^2_nSiO_{(4-m-n)/2} \qquad (1)$$

Herein $R^1$ is a substituted or unsubstituted monovalent hydrocarbon group of 1 to 10 carbon atoms, $R^2$ is an epoxy-containing organic group, m and n are numbers in the range: m > 0, n > 0 and 0 < m+n ≤ 3.
Specifically, $R^1$ is selected from unsubstituted or substituted (exclusive of epoxy-containing substituents) monovalent hydrocarbon groups of 1 to 10 carbon atoms, preferably 1 to 8 carbon atoms, for example, alkyl groups such as methyl, ethyl, propyl and butyl, cycloalkyl groups such as cyclohexyl, aryl groups such as phenyl and tolyl, substituted forms of the foregoing in which some or all carbon-bonded hydrogen atoms are substituted by hydroxyl, cyano, halogen or the like, such as hydroxypropyl, cyanoethyl, 1-chloropropyl, and 3,3,3-trifluoropropyl. Desirably, alkyl groups account for at least 80 mol%, more desirably 90 to 100 mol% of $R^1$. Methyl is most preferred as the alkyl group.
$R^2$ is an epoxy-containing organic group, preferably shown by the following formula (i) or (ii):

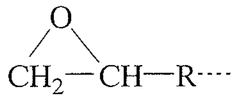

(i)

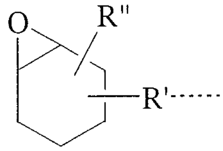

(ii)

wherein R is an alkylene group having 2 to 6 carbon atoms which may interpose an oxygen atom, R' is an alkylene group having 1 to 4 carbon atoms, R" is hydrogen atom or an alkyl group having 1 to 4 carbon atoms, and the broken line denotes a valence bond.

Examples of the epoxy-containing organic group include the following:

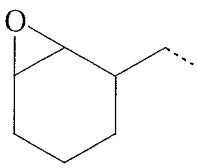

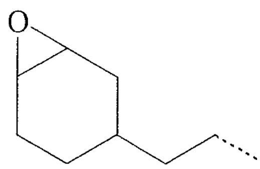

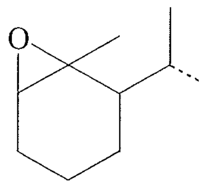

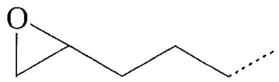

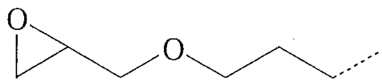

Notably, the broken line denotes a valence bond.

The preferred epoxy-containing organic group is the group of the above formula (i).

In formula (1), m and n are numbers in the range: $m > 0$, $n > 0$ and $0 < m+n \leq 3$. Preferably, $0.3 \leq m \leq 2.0$, $\leq n \leq 2.0$, $0.6 \leq m+n \leq 2.5$. More preferably, $0.5 \leq m \leq 1.5$, $0.5 \leq n \leq 1.5$, $1.0 \leq m+n \leq 2.5$, especially, $1.8 \leq m+n \leq 2.2$.

Preferably component (A) has an epoxy equivalent of 200 to 2,000 g/mol, more preferably 300 to 600 g/mol. The amount of (meth)acrylic group in the (meth)acrylic-modified organopolysiloxane resulting from reaction of components (A) to (C) depends on the epoxy equivalent of component (A) and has an impact on the cure of the (meth)acrylic-modified organopolysiloxane and the adhesion and release force of the cured organopolysiloxane during service as release liner. If the epoxy equivalent is less than 200 g/mol, the release force may be extremely increased. If the epoxy equivalent exceeds 2,000 g/mol, the cure and adhesion may be poor.

Also preferably component (A) has a viscosity of up to 1,000 mPa-s, more preferably up to 500 mPa-s as measured at 25°C by a Brookfield rotational viscometer although the viscosity is not particularly limited. The lower limit of viscosity is typically at least 10 mPa-s. Although the product (meth)acrylic-modified organopolysiloxane has a higher viscosity than the starting epoxy-modified organopolysiloxane, we find that silicone compositions comprising the product organopolysiloxane (prior to cure) are still in general readily coated when the viscosity of the starting organopolysiloxane was in the above range.

Component (A) may be obtained by reacting a methylhydrogenpolysiloxane having a Si-H group with an epoxy/alkenyl-containing compound in the presence of a metal complex catalyst. The epoxy/alkenyl-containing compound is a compound having at least one epoxy group and at least one alkenyl group per molecule. Suitable alkenyl groups include those of 2 to 8 carbon atoms such as vinyl, allyl, propenyl and butenyl. Exemplary epoxy/alkenyl-containing compounds include 4-vinylcyclohexene oxide, 4-isopropenyl-1-methylcyclohexene oxide, allyl glycidyl ether, 1,5-hexadiene monoxide, and glycidyl (meth)acrylic.

Illustrative examples of the organopolysiloxane as component (A) are given below. Notably, Me stands for methyl.

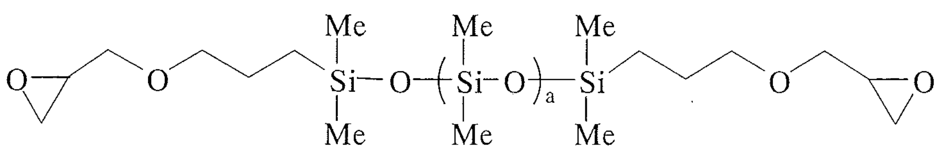

Herein "a" is such a number that this organopolysiloxane may have a viscosity within the above-defined range.

(B) (Meth)acrylic acid

A second reactant is (B) (meth)acrylic acid having the following formula:

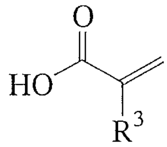

wherein $R^3$ is hydrogen or methyl. (Meth)acrylic acid is used in an amount of at least 1.0 equivalent, preferably at least 1.5 equivalents per equivalent of epoxy group in component (A). The amount of (meth)acrylic group in the product organopolysiloxane largely dominates the cure upon radiation exposure and the adhesion thereof. The more (meth)acrylic groups, the better the cure and adhesion become. If component (B) is less than 1.0 equivalent, theoretically not all epoxy groups are reacted and less (meth)acrylic groups are introduced, and as a result, the cure and adhesion may become worsened. If component (B) is too much, there is a possibility of side reaction to form a homopolymer of component (B). Thus component (B) is preferably up to 3.0 equivalents, more preferably up to 2.5 equivalents.

(C) Base

A third reactant is (C) a base which is used in an amount of 0.01 to 0.1 equivalent, preferably 0.02 to 0.08 equivalent per equivalent of epoxy group in component (A). The base is an alkali metal or alkaline earth metal hydroxide.

The following reaction mechanism can be regarded as describing the opening of the epoxy ring with (meth)acrylic acid to introduce (meth)acrylic group.

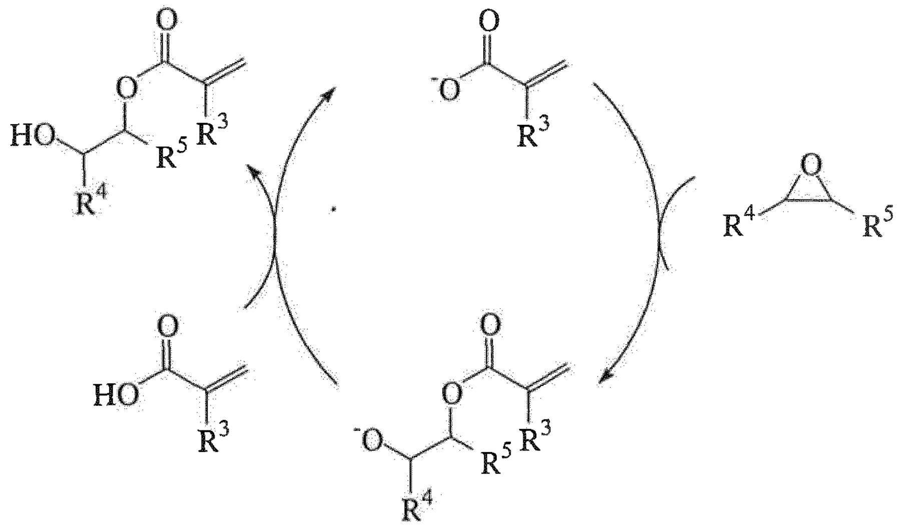

Herein $R^3$ is hydrogen or methyl. $R^4$ and $R^5$ are selected from unsubstituted or substituted monovalent hydrocarbon groups of 1 to 10 carbon atoms, for example, alkyl groups such as methyl, ethyl, propyl and butyl, cycloalkyl groups such as cyclohexyl, aryl groups such as phenyl and tolyl, substituted forms of the foregoing in which some or all carbon-bonded hydrogen atoms are substituted by hydroxyl, cyano, halogen or the like, such as hydroxypropyl, cyanoethyl, 1-chloropropyl, and 3,3,3-trifluoropropyl. $R^4$ and $R^5$ may be the same or different.

As illustrated above, deprotonation of (meth)acrylic acid results in an anion species, which attacks epoxy ring to open it. The epoxy ring receives proton from a stoichiometric amount of (meth)acrylic acid to form a ring-opened product. Simultaneously, deprotonation occurs again to regenerate the anion species. In this estimated cycle, the factor that causes to generate the anion species is needed. A base is considered to undergo quick reaction with acrylic acid. The most preferred bases are NaOH and KOH.

Once the anion species, even in minor amount, is generated, the cycle of reactions runs. Thus component (C) may be used in a catalytic amount. However, if the amount of component (C) is less than 0.01 equivalent per equivalent of epoxy group in component (A), then the reactions may run slowly. If the amount of component (C) is more than 0.1 equivalent per equivalent of epoxy group in component (A), then a salt may form as byproduct and the treatment thereof may take a certain time.

For the reaction of component (A) with component (B), a solvent may be added if desired. A choice must be made among those solvents which are not reactive with the base. Protonic polar solvents such as alcohols are undesirable, because deprotonation of the alcohol occurs along with deprotonation of (meth)acrylic acid, which indicates that ring-opening of epoxy can be triggered by an anion other than the (meth)acrylic acid anion, and the amount of (meth)acrylic group introduced is thus reduced. Examples of the solvent which can be used herein include toluene, xylene, N,N-dimethylformamide, and acetonitrile.

If desired, a polymerization inhibitor may be added. Suitable polymerization inhibitors include alkylphenols, for example, p-methoxyphenol, 2,6-di-t-butylhydroxytoluene, 4,4'-dioxydiphenol, 1,1'-bis(4-hydroxyphenyl)cyclohexane, 3-methyl-4-isopropylphenol, 2,4,5-trihydroxybutyrophenone, 2,6-di-t-butylphenol, 2,5-di-t-amylhydroquinone, 2,5-di-t-butylhydroquinone, 4-hydroxymethyl-2,6-di-t-butylphenol, 2,6-di-t-butyl-α-dimethylamino-p-cresol, 4,4-bis(2,6-dibutylphenol), 2,2'-methylene-bis(4-ethyl-6-t-butylphenol), 2,2'-methylene(2,6-di-t-butylphenol), 4,4'-methylene(2,6-di-t-butylphenol), 4,4'-butylidene(3-methyl-6-t-butylphenol), 4,4'-thiobis(6-t-butyl-3-methylphenol), bis(3-methyl-4-hydroxy-5-t-butylbenzyl)sulfide, 4,4'-thiobis(6-t-butyl-o-cresol), and 2,2'-thiobis(4-methyl-6-t-butylphenol).

Amines are also useful as the polymerization inhibitor. Exemplary amines include alkylated diphenylamines, N,N'-diphenyl-p-phenylenediamine, phenothiazine, 4-hydroxy-2,2,6,6-tetramethylpiperidine, 4-benzoyloxy-2,2,6,6-tetramethylpiperidine, 1,4-dihydroxy-2,2,6,6-tetramethylpiperidine, and 1-hydroxy-4-benzoyloxy-2,2,6,6-tetramethylpiperidine.

Specifically, a (meth)acrylic-modified organopolysiloxane may be obtained by combining (A) an epoxy-modified organopolysiloxane, (B) (meth)acrylic acid, and (C) the basic catalyst, optionally adding solvent thereto, and heating at 70 to 110°C, especially 80 to 100°C for 8 to 40 hours, especially 12 to 30 hours for effecting reaction. The (meth)acrylic-modified organopolysiloxane preferably has a viscosity of 50 to 5,000 mPa-s, more preferably 100 to 500 mPa-s as measured at 25°C by a Brookfield rotational viscometer. The rate of acrylic introduction is typically at least 90%, preferably at least 95%. It will be described later how to compute the rate of acrylic introduction.

The (meth)acrylic-modified organopolysiloxane obtained from the method has the average compositional formula (2).

$$R^1_m R^6_n SiO_{(4-m-n)/2} \qquad (2)$$

Herein $R^1$, m and n are as defined above. $R^6$ is an organic group containing a (meth)acryloxy group, preferably represented by the following formula (3)-1, (3)-2 or (4).

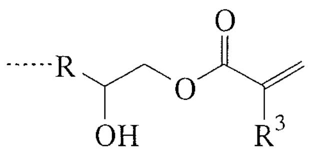

(3)-1

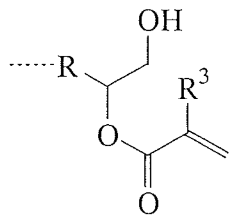

(3)-2

Herein R and $R^3$ are as defined above, and the broken line denotes a valence bond.

On opening of epoxy ring by (meth)acrylic acid, two ring-opened products as shown by formula (3)-1 or (3)-2 are expected. This is because the active anion species has two reaction paths as shown below.

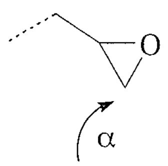

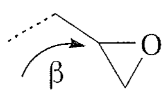

The α-path refers to an attack from less substitution side of epoxy, and the β-path refers to an attack from more substitution side of epoxy. In the method of the invention, there may form either one of the products or a mixture thereof. Although a hydroxyl group is simultaneously formed as seen from formula (3)-1 or (3)-2, a product having two acrylic groups introduced as shown by formula (4) is acceptable which results from esterification with an excess of (meth)acrylic acid. A mixture of products as shown by formulae (3)-1, (3)-2 and (4) is also acceptable.

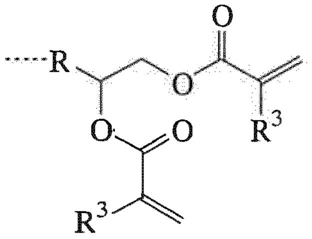

(4)

Herein R and $R^3$ are as defined above, and the broken line denotes a valence bond.

Examples of (meth)acryloxy-containing organic group $R^6$ are given below.

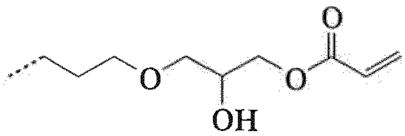

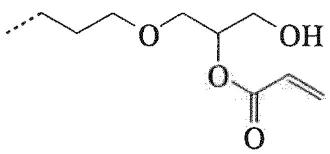

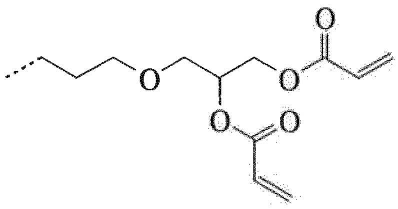

Herein the broken line denotes a valence bond.

The (meth)acrylic-modified organopolysiloxane obtained in the method of the invention may be used alone or in combination with an organopolysiloxane of the same type having a different degree of polymerization or (meth)acrylic content, to formulate a radiation-curable silicone composition. Various additives may be added to the composition as long as the advantages of the composition are not compromised. Suitable additives include photopolymerization initiators such as acetophenone, benzophenone, 4-chlorobenzophenone, 4,4-dimethoxybenzophenone, 4-methylacetophenone, benzoin methyl ether, benzoin trialkylsilyl ethers, and 2-hydroxy-2-methyl-1-phenylpropan-1-one; oxygen cure inhibition suppressors such as diethylamine, 2-diethylamine ethanol and piperidine; reactive diluents such as hexadiol acrylic and trimethylolpropane triacrylic; organic solvents, leveling agents, fillers, antistatic agents, defoamers, pigments, and other organopolysiloxanes.

The radiation-curable silicone composition comprising a (meth)acrylic-modified organopolysiloxane is suited for use as back coating agents for pressure-sensitive adhesive tapes, protective coating agents on metal and plastic parts, and coating bases. On use, the composition is applied onto substrates such as paper sheets, plastic films, and metal foils (e.g., aluminum), by means of a bar coater, gravure coater, or reverse coater or by spraying, and then exposed to radiation for curing to form a film having a thickness of preferably 0.05 to 200 $\mu$m, more preferably 0.1 to 150 $\mu$m. Examples of the radiation used for curing include electron beam (EB), $\alpha$-ray, $\beta$-ray, x-ray, and ultraviolet (UV) from mercury arc lamps, low, medium and high-pressure mercury lamps. The dose of radiation necessary for curing the coating may be about 2 to 5 Mrad when EB is used. In the case of UV, the coating may be exposed to radiation from a 2-kW high-pressure mercury lamp (80 W/cm) at a distance of 8 cm for 0.01 to 10 seconds. In the case of UV exposure, the photopolymerization initiator should preferably be added to the silicone composition.

## EXAMPLE

Examples and Comparative Examples are given below by way of illustration and not by way of limitation. All parts are by weight. The viscosity is measured at 25°C by a Brookfield rotational viscometer. The refractive index is measured at 25°C by a digital refractomer RX-7000$\alpha$ (Agago Co., Ltd.) of the light refraction critical angle detection mode. The rate of acrylic introduction is computed by the following method. Substrate adhesion and release force are measured by the following tests.

### Rate of acrylic introduction

The rate of acrylic introduction in acrylic-modified organopolysiloxane was computed using $^1$H-NMR spectroscopy. Since the proton ($\delta$=0.54) of methylene group directly bonded to a Si atom in a starting epoxy-modified organopolysiloxane remains unchanged before and after reaction, the peak of this proton is used as the reference. The proton of acrylic group appears at positions of $\delta$=5.85, 6.15 and 6.42. Provided that the integrated value of the peak of the methylene's proton as the reference is "1.00", the peak integrated value of acrylic proton upon completion of theoretical 100% reaction is "0.50" due to the number of protons. The rate of acrylic introduction is computed by dividing the average of the peak integrated values of three acrylic protons by 0.50 and expressed in percentage, as seen from the following

equation.

$$\text{Rate of acrylic introduction} = [(\text{the average of the peak integrated values of three acrylic protons})/0.50] \times 100\%$$

Substrate adhesion

A radiation-curable silicone composition was prepared and roll coated onto a corona-treated polyethylene-laminated paper sheet or PET film in a coating weight of about 0.8 g/$cm^2$. The coating was cured upon exposure to UV from two 80 W/cm high-pressure mercury lamps in a dose of 100 mJ/$cm^2$. The adhesion of the cured coating to the substrate was examined by rubbing the surface of the cured coating with the finger and visually inspecting the adhesion thereof. The sample was rated good (○) when the coating was kept intact, mediocre (Δ) when some coating was peeled off, and poor (×) when the coating was peeled off the substrate.

Release force

To the surface of the cured coating in the above test, an acrylic-based adhesive tape (TESA7475 tape, 25 mm wide) was applied. A sample for release force test was obtained by once moving a roller of 2 kg back and forth for pressure bonding. The sample was aged at 70°C for 20-24 hours under a load of 70 gf/$cm^2$. Thereafter, using a tensile tester, the tape was pulled back at an angle of 180° and a peel speed of 0.3 m/min. A force (N/25 mm) required to release the tape was measured.

Example 1

A 500-mL separable flask equipped with a stirrer, thermometer, dropping funnel and reflux condenser was charged with 143.16 parts of an epoxy-modified organopolysiloxane of formula (5) (epoxy equivalent 490 g/mol, viscosity 19 mPa-s), 0.3 part of NaOH, 9.78 parts of dibutylhydroxytoluene, and 0.0018 part of Antage Dp (Kawaguchi Chemical Industry Co., Ltd., N,N'-diphenyl-p-phenylenediamine), and heated at 50°C in an oil bath. Once the temperature of 50°C was reached, 43.24 parts of acrylic acid was added dropwise from the dropping funnel. At the end of dropwise addition, the temperature was raised, whereupon the mixture was heated and stirred at 90-100°C for 24 hours. The reaction mixture was concentrated by heating under reduced pressure at 120°C for 3 hours. The concentrate was filtered, obtaining an acrylic-modified organopolysiloxane as pale yellow transparent oil.

On analysis by $^1$H-NMR spectroscopy, the product was identified to be an acrylic-modified organopolysiloxane having the average compositional formula (6) wherein Me stands for methyl and Ac is a mixture of groups of formulae (7) to (9). This organopolysiloxane had a viscosity of 141 mPa-s, a refractive index of 1.439, and a rate of acrylic introduction as shown in Table 1.

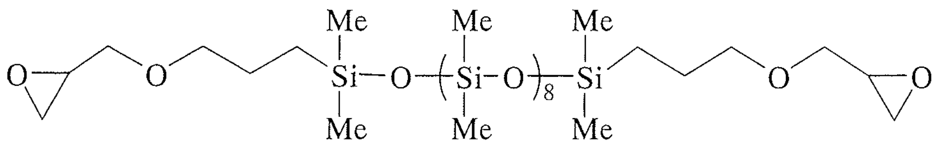
(5)

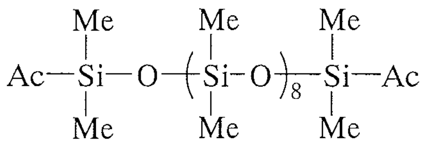
(6)

Ac:

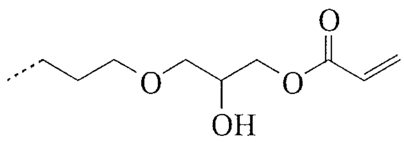

(7)

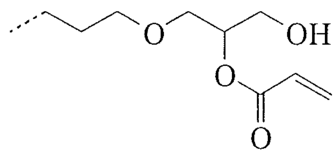

(8)

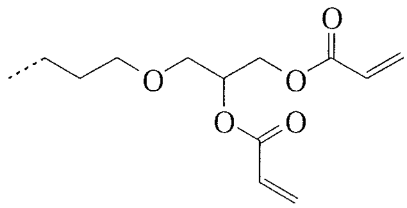

(9)

Notably, the broken line denotes a valence bond.

Example 2

An acrylic-modified organopolysiloxane was synthesized by the same procedure as in Example 1 except that the amount of acrylic acid added dropwise from the funnel was 32.43 parts. After the addition of acrylic acid, the mixture was heated and stirred at 90-100°C for 30 hours. The reaction mixture was concentrated by heating under reduced pressure at 120°C for 3 hours, and filtered, obtaining an acrylic-modified organopolysiloxane as pale yellow transparent oil. This organopolysiloxane had a viscosity of 138 mPa-s, a refractive index of 1.438, and a rate of acrylic introduction as shown in Table 1.

Example 3

An acrylic-modified organopolysiloxane was synthesized by the same procedure as in Example 1 except that 49.12 parts of toluene was added. After the addition of acrylic acid, the mixture was heated and stirred at 90-100°C for 36 hours. The reaction mixture was concentrated by heating under reduced pressure at 120°C for 3 hours, and filtered, obtaining an acrylic-modified organopolysiloxane as pale yellow transparent oil. This organopolysiloxane had a viscosity of 140 mPa-s, a refractive index of 1.438, and a rate of acrylic introduction as shown in Table 1.

Example 4

To 100 parts of the acrylic-modified organopolysiloxane obtained in Example 1 was added 5 parts of 2-hydroxy-2-methyl-1-phenylpropan-1-one as a photopolymerization initiator. They were thoroughly mixed and roll coated onto a corona-treated polyethylene-laminated paper sheet or PET film in a coating weight of about 0.8 g/cm$^2$. The coating was cured upon exposure to UV from two 80 W/cm high-pressure mercury lamps in a dose of 100 mJ/cm$^2$. The cured coating was tested for substrate adhesion and release force, with the results reported in Tables 2 and 3.

Example 5

A cured coating was prepared as in Example 4 aside from using the acrylic-modified organopolysiloxane obtained in Example 2. The substrate adhesion and release force of this cured coating are reported in Tables 2 and 3.

Example 6

A cured coating was prepared as in Example 4 aside from using the acrylic-modified organopolysiloxane obtained in Example 3. The substrate adhesion and release force of this cured coating are reported in Tables 2 and 3.

Comparative Example 1

An acrylic-modified organopolysiloxane was synthesized according to the teaching of Patent Document 1 (JP-B H05-083570). A 500-mL separable flask equipped with a stirrer, thermometer, dropping funnel and reflux condenser was charged with 143.16 parts of an epoxy-modified organopolysiloxane of formula (5) (epoxy equivalent 490 g/mol), 75.05 parts of toluene, 0.060 part of dibutylhydroxytoluene, 1.195 parts of 1,4-diazabicyclo(2,2,2)octane, and 0.0024 part of Antage Dp (Kawaguchi Chemical Industry Co., Ltd., N,N'-diphenyl-p-phenylenediamine), and heated at 50°C in an oil bath. Once the temperature of 50°C was reached, a mixture of 19.46 parts of acrylic acid and 3.78 parts of acrylic anhydride was added dropwise from the dropping funnel. At the end of dropwise addition, the temperature was raised, whereupon the mixture was heated and stirred at 90-100°C for 40 hours. The reaction mixture was concentrated by heating under reduced pressure at 120°C for 3 hours, and filtered, obtaining an acrylic-modified organopolysiloxane as pale yellow transparent oil. This organopolysiloxane had a viscosity of 612 mPa-s, a refractive index of 1.436, and a rate of acrylic introduction as shown in Table 1.

Comparative Example 2

To 100 parts of the acrylic-modified organopolysiloxane obtained in Comparative Example 1 was added 5 parts of 2-hydroxy-2-methyl-1-phenylpropan-1-one as a photopolymerization initiator. They were thoroughly mixed and roll coated onto a corona-treated polyethylene-laminated paper sheet or PET film in a coating weight of about 0.8 $g/cm^2$. The coating was cured upon exposure to UV from two 80 W/cm high-pressure mercury lamps in a dose of 100 $mJ/cm^2$. The cured coating was tested for substrate adhesion and release force, with the results reported in Tables 2 and 3.

Table 1

| | Rate of acrylic introduction (%) |
|---|---|
| Example 1 | > 99 |
| Example 2 | > 99 |
| Example 3 | > 99 |
| Comparative Example 1 | 87 |

Table 2

| Substrate: corona-treated polyethylene-laminated paper | | |
|---|---|---|
| | Substrate adhesion | Release force (N/25 mm) |
| Example 4 | ○ | 1.5 |
| Example 5 | ○ | 1.6 |
| Example 6 | ○ | 1.4 |
| Comparative Example 2 | Δ | 1.2 |

Table 3

| Substrate: PET film | | |
|---|---|---|
| | Substrate adhesion | Release force (N/25 mm) |
| Example 4 | ○ | 1.4 |
| Example 5 | ○ | 1.6 |
| Example 6 | ○ | 1.6 |
| Comparative Example 2 | Δ | 1.4 |

It is seen that the acrylic-modified organopolysiloxanes of Examples 1 to 3 have acrylic introduced in an amount equal to or more than the amount of epoxy in the starting reactant. This is probably because esterification with a hydroxyl

group (-OH) formed after ring opening takes place to form a diacrylic product of formula (9) as well. In contrast, in Comparative Example 1, the rate of acrylic introduction is no more than 87%, implying that it is difficult for all acrylic acid charged to participate in reaction. The acrylic-modified organopolysiloxane of Comparative Example 1 has a higher viscosity than those of Examples 1 to 3, probably because ring-opening polymerization of epoxy takes place rather than reaction of epoxy with acrylic, forming a polymeric product.

Notes

(i) In respect of numerical ranges disclosed in the present description it will of course be understood that in the normal way the technical criterion for the upper limit is different from the technical criterion for the lower limit, i.e. the upper and lower limits are intrinsically distinct proposals.
(ii) For the avoidance of doubt it is confirmed that in the general description above, in the usual way the proposal of general preferences and options in respect of different features of the methods and release liners constitutes the proposal of general combinations of those general preferences and options for the different features, insofar as they are combinable and compatible and are put forward in the same context.

## Claims

**1.** A method for preparing a silicone release liner, comprising the steps of
reacting (A) an epoxy-modified organopolysiloxane having the average compositional formula (1):

$$R^1_mR^2_nSiO_{(4-m-n)/2} \qquad (1)$$

wherein $R^1$ is a substituted or unsubstituted monovalent hydrocarbon group of 1 to 10 carbon atoms, $R^2$ is an epoxy-containing organic group, m and n are numbers in the range: m > 0, n > 0 and 0 < m+n ≤ 3, with (B) (meth)acrylic acid in an amount of at least 1.0 equivalent per equivalent of epoxy group in component (A) in the presence of (C) a base selected from an alkali metal hydroxide and alkaline earth metal hydroxide in an amount of 0.01 to 0.1 equivalent per equivalent of epoxy group in component (A), thereby obtaining a (meth)acrylic-modified organopolysiloxane having the average compositional formula (2):

$$R^1_mR^6_nSiO_{(4-m-n)/2} \qquad (2)$$

wherein $R^1$, m and n are as defined above, $R^6$ is a (meth)acryloxy-containing organic group,
mixing the (meth)acrylic-modified organopolysiloxane with a photopolymerization initiator, thereby obtaining a radiation-curable silicone composition,
coating the composition onto a substrate to form a coating thereon, and
exposing the coating to radiation for curing the coating.

**2.** A method of claim 1 wherein reactant (A) has an epoxy equivalent of 200 to 2000 g/mol.

**3.** The method of claim 1 or claim 2, wherein $R^2$ in formula (1) is an epoxy-containing organic group of the following formula (i):

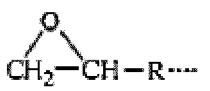
(i)

wherein R is an alkylene group having 2 to 6 carbon atoms which may interpose an oxygen atom, and the broken line denotes a valence bond.

**4.** The method of any one of claims 1 to 3, wherein component (A) has a viscosity of 10 to 1,000 mPa-s.

**5.** The method of any one of claims 1 to 4, wherein component (C) is NaOH or KOH.

**6.** The method of any one of claims 1 to 5 wherein the photopolymerization initiator is selected from the group consisting

of acetophenone, benzophenone, 4-chlorobenzophenone, 4,4-dimethoxybenzophenone, 4-methylacetophenone, benzoin methyl ether, benzoin trialkylsilyl ethers, and 2-hydroxy-2-methyl-1-phenylpropan-1-one.

**7.** A silicone release liner which has been prepared by the method of any one of claims 1 to 6.

## Patentansprüche

**1.** Verfahren zur Herstellung einer Siliconabziehschicht, umfassend die folgenden Schritte:

Umsetzen (A) eines epoxymodifizierten Organopolysiloxans mit der durchschnittlichen Zusammensetzungsformel (1):

$$R^1_mR^2_nSiO_{(4-m-n)/2} \quad (1)$$

worin $R^1$ eine substituierte oder nichtsubstituierte einwertige Kohlenwasserstoffgruppe mit 1 bis 10 Kohlenstoffatomen ist, $R^2$ eine epoxyhaltige organische Gruppe ist, m und n Zahlen im folgenden Bereich sind: m > 0, n > 0 und 0 < m+n ≤ 3, mit (B) (Meth)acrylsäure in einer Menge von zumindest 1,0 Äquivalent der Epoxygruppe in Komponente (A) in der Gegenwart von (C) einer Base, die aus einem Alkalimetallhydroxid und Erdalkalimetallhydroxid ausgewählt ist, in einer Menge von 0,01 bis 0,1 Äquivalent pro Äquivalent der Epoxygruppe in Komponente (A); wodurch ein (Meth)acrylsäure-modifiziertes Organopolysiloxan mit der durchschnittlichen Zusammensetzungsformel (2) erhalten wird:

$$R^1_mR^6_nSiO_{(4-m-n)/2} \quad (2)$$

worin $R^1$, m und n wie oben definiert sind, $R^6$ eine (Meth)acryloxy-enthaltende organische Gruppe ist,
Vermischen des (Meth)acrylsäure-modifizierten Organopolysiloxans mit einem Photopolymerisationsinitiator, wodurch eine strahlenhärtbare Siliconzusammensetzung erhalten wird,
Beschichten der Zusammensetzung auf ein Substrat, um darauf eine Beschichtung zu bilden, und
Aussetzen der Beschichtung gegenüber Strahlung, um die Beschichtung zu härten.

**2.** Verfahren nach Anspruch 1, wobei Reaktant (A) ein Epoxyäquivalent von 200 bis 2000 g/mol aufweist.

**3.** Verfahren nach Anspruch 1 oder Anspruch 2, wobei $R^2$ in Formel (1) eine epoxyhaltige organische Gruppe der folgenden Formel (i) ist:

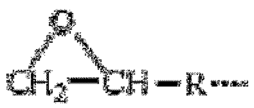 (i)

worin R eine Alkylengruppe mit 2 bis 6 Kohlenstoffatomen ist, zwischen denen ein Sauerstoffatom eingefügt sein kann, und die gestrichelte Linie für eine Valenzbindung steht.

**4.** Verfahren nach einem der Ansprüche 1 bis 3, wobei Komponente (A) eine Viskosität von 10 bis 1000 mPa-s aufweist.

**5.** Verfahren nach einem der Ansprüche 1 bis 4, wobei Komponente (C) NaOH oder KOH ist.

**6.** Verfahren nach einem der Ansprüche 1 bis 5, wobei der Photopolymerisationsinitiator aus der Gruppe bestehend aus Acetophenon, Benzophenon, 4-Chlorbenzophenon, 4,4-Dimethoxybenzophenon, 4-Methylacetophenon, Benzoinmethylether, Benzointrialkylsilylethern und 2-Hydroxy-2-methyl-1-phenylpropanl-on ausgewählt ist.

**7.** Siliconabziehschicht, die über ein Verfahren nach einem der Ansprüche 1 bis 6 hergestellt wurde.

## Revendications

**1.** Procédé pour préparer une bande de protection antiadhésive siliconée, comprenant les étapes consistant à

faire réagir (A) un organopolysiloxane à modification époxy répondant à la formule de composition moyenne (1) :

$$R^1_mR^2_nSiO_{(4-m-n)/2} \quad (1)$$

dans laquelle $R^1$ est un groupe hydrocarboné monovalent substitué ou non substitué de 1 à 10 atomes de carbone, $R^2$ est un groupe organique contenant un radical époxy, m et n sont des nombres situés dans les plages : $m > 0$, $n > 0$ et $0 < m+n \leq 3$, avec (B) de l'acide (méth)acrylique en une quantité d'au moins 1,0 équivalent par équivalent de groupe époxy dans le composant (A), en présence de (C) une base choisie parmi un hydroxyde de métal alcalin et un hydroxyde de métal alcalino-terreux en une quantité de 0,01 à 0,1 équivalent par équivalent de groupe époxy dans le composant (A), ce qui donne ainsi un organopolysiloxane à modification (méth)acrylique répondant à la formule de composition moyenne (2) :

$$R^1_mR^6_nSiO_{(4-m-n)/2} \quad (2)$$

dans laquelle $R^1$, m et n sont tels que définis ci-dessus, et $R^6$ est un groupe organique contenant un radical (méth)acryloxy,
mélanger l'organopolysiloxane à modification (méth)acrylique avec un amorceur de photopolymérisation, ce qui donne ainsi une composition de silicone durcissable par irradiation,
déposer la composition sous forme de revêtement sur un substrat pour former un revêtement sur celui-ci, et
exposer le revêtement à un rayonnement pour durcir le revêtement.

2. Procédé selon la revendication 1, dans lequel le réactif (A) a un équivalent époxy de 200 à 2000 g/mol.

3. Procédé selon la revendication 1 ou la revendication 2, dans lequel $R^2$ dans la formule (1) est un groupe organique contenant un radical époxy de formule (i) suivants :

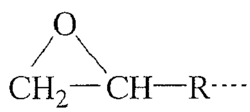

(i)

dans laquelle R est un groupe alkylène ayant 2 à 6 atomes de carbone pouvant intercaler un atome d'oxygène, et la ligne de tirets désigne une liaison de valence.

4. Procédé selon l'une quelconque des revendications 1 à 3, dans lequel le composant (A) a une viscosité de 10 à 1000 mPa.s.

5. Procédé selon l'une quelconque des revendications 1 à 4, dans lequel le composant (C) est NaOH ou KOH.

6. Procédé selon l'une quelconque des revendications 1 à 5, dans lequel l'amorceur de photopolymérisation est choisi dans l'ensemble constitué par l'acétophénone, la benzophénone, la 4-chlorobenzophénone, la 4,4-diméthoxybenzophénone, la 4-méthylacétophénone, l'éther méthylique de benzoïne, les éthers trialkylsilyliques de benzoïne, et la 2-hydroxy-2-méthyl-1-phénylpropan-1-one.

7. Bande de protection antiadhésive siliconée qui a été préparée par le procédé de l'une quelconque des revendications 1 à 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H0583570 B
- EP 0281681 A
- US 4908274 A
- JP H05083570 B